# EUROPEAN PATENT APPLICATION

(11) **EP 1 967 779 A1**
(43) Date of publication of application: **10.09.2008**
(21) Application number: 07103749.3
(22) Date of filing: 08.03.2007
(51) Int. Cl.: F16L 21/025, F16L 43/00, B21C 37/12

(54) **Spiral duct**

(71) Applicant: Jinwoong Technology, 678-1, Ssangsong-ri, Mado-myun, Hwaseong-shi 445-861 Kyonggi-do (KR)
(72) Inventor: Cha, Kyu-Seok, 137-060 Seoul (KR)
(74) Representative: Savolainen, Seppo Kalevi

(57) **Abstract**

Provided is an integrated spiral duct (100) including: a curved duct (100); and straight connection ducts (200) formed at both ends of the curved duct (100), wherein the curved duct is integrally formed with the straight connection ducts in spiral type without any joint. Therefore, since a metal strip is continuously wound to form a duct without any joint it is possible to reduce the number of manufacturing process to remarkably increase productivity, quality, and durability.

## Description

### BACKGROUND OF THE INVENTION

### Field of the invention

The present invention relates to an integrated spiral duct, and more particularly, to an integrated spiral duct in which straight connection ducts are integrally formed with both ends of a curved duct in spiral type.

### Description of the Prior Art

A circular hollow duct is widely used for air-conditioning or gas flow in industrial plants or buildings.

Generally, the hollow duct has a straight shape. However, in order to install the duct in a place where a space is small or obstacles exist, various curved ducts are interposed between the straight ducts to change its installation direction.

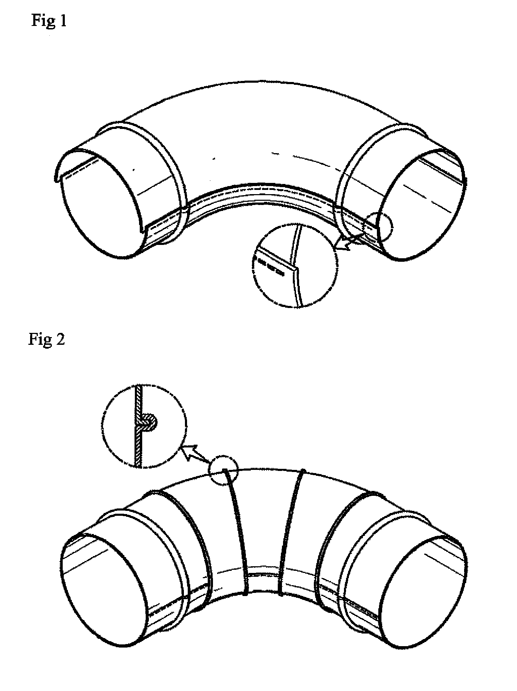

FIGS. 1 to 4 illustrate examples of conventional curved hollow ducts.

FIG.1 illustrates a structure of a duct, upper and lower semi-circular duct halves of which are bent to have a predetermined radius of curvature and welded to each other.

However, it is very troublesome and difficult to form the upper and lower halves of the duct structure of FIG. 1. In addition, it is also very difficult to form connection parts (circumferential projections) of both ends of the duct coupled with other ducts. Further, when the coupled parts of the upper and lower parts are skewed, it is also very difficult to connect the curved duct to the other ducts.

FIG. 2 illustrates a structure of a duct in which a plurality of straight sections are coupled to each other to form a curved duct. The duct of FIG. 2 is fabricated by separately forming the respective sections and then folding the sections in a form of holding each others hands, or welding the sections to each other.

However, according to the conventional art, a large number of processes are required to couple the plurality of sections to each other, and insuffcient strength of the connection parts may cause a decrease in durability.

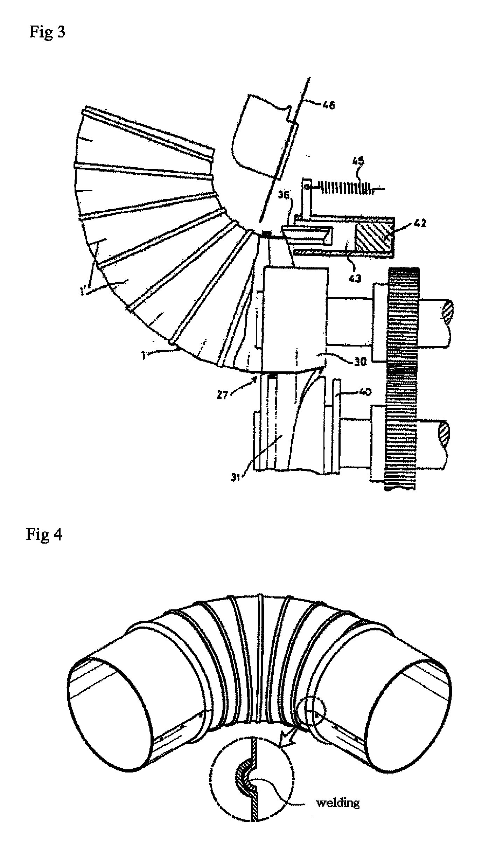

Meanwhile, Korean Patent Laid-open Publication No. 1990-17678 discloses a curved duct in which a specific-shaped metal strip is continuously wound, and the configuration thereof will be described with reference to FIG. 3.

First, the conventional curved duct is formed of a band-shaped metal plate. The metal plate has a plurality of large width parts and small width parts, which are alternately formed. The metal plate also has a straight side and a wave-shaped side formed in a longitudinal direction.

The straight side of the metal plate has a dual bent structure, and the wave-shaped side of the metal plate has a single bent part perpendicular to the entire length.

In addition, the metal plate is wound in spiral type such that the large width part is positioned at an outer curved part and the small width part is positioned at an inner curved part to sequentially insert the single bent part into the dual bent part, and then the bent parts are press fitted to each other, thereby securely coupling the bent parts to each other at each joint.

Further, in the conventional art, it is disclosed that two sheets of band-shaped metal plates used as a curved duct can be obtained using a single sheet of band-shaped metal plate.

However, in the conventional art, there is no duct in which a curved duct is integrally formed with a straight duct.

For this reason, as shown in FIG. 4, a curved duct and a straight connection duct are connected to each other through welding.

However, in this case, since the curved duct and the straight connection duct are welded to each other, a large number of processes are still required to make manufacturing thereof troublesome, and joint parts may be irregular.

### SUMMARY OF THE INVENTION

An object of the present invention is to provide an integrated spiral duct capable of reducing the number of processes to remarkably increase productivity, and improving quality by removing a joint.

Another object of the present invention is to provide an integrated spiral duct capable of removing a joint by integrally forming the duct to remarkably increase durability.

An aspect of the present invention provides an integrated spiral duct including: a curved duct; and straight connection ducts formed at both ends of the curved duct, wherein the curved duct is integrally formed with the straight connection ducts in spiral type without any joint.

Here, the spiral duct may be a strip including both ends having a uniform width, and an intermediate part having one side with a periodical waveform and the other side of a straight flat shape when the spiral duct is uncoiled.

In addition, each of the straight connection ducts may have a convex annular part formed at a predetermined position to be connected to another duct.

Further, side edges of the respective sections of the spiral may be hooked to each other and then seamed.

Here, each section of the spiral may have a Z-shaped cross-section, and flange parts of the section may constitute a coupling part of the seamed side edges.

In addition, the straight connection duct may have dual concave annular parts formed outside the convex annular part, and an O-ring may be further installed to be inserted into the concave annular part.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view showing an example of a conventional duct;
FIG. 2 is a perspective view showing another example of a conventional duct;
FIG. 3 is a perspective view showing an example of a conventional curved duct;
FIG. 4 is a perspective view showing still another example of a conventional duct;
FIG. 5 is a perspective view and a plan view of a curved duct in accordance with an exemplary embodiment of the present invention;
FIG. 6 is a partial perspective view of a coupling part of FIG. 5;
FIG. 7 is a plan view showing uncoiled shape of the curved duct of FIG. 5;
FIG. 8 is a schematic view showing a process of manufacturing the duct of FIG. 5; and
FIG. 9 is a perspective view of a curved duct in accordance with another exemplary embodiment of the present invention.

### DETAILED DESCRIPTION OF EXEMPLARY EMBODIMENTS

Hereinafter, exemplary embodiments of the present invention will be described with reference to the accompanying drawings.

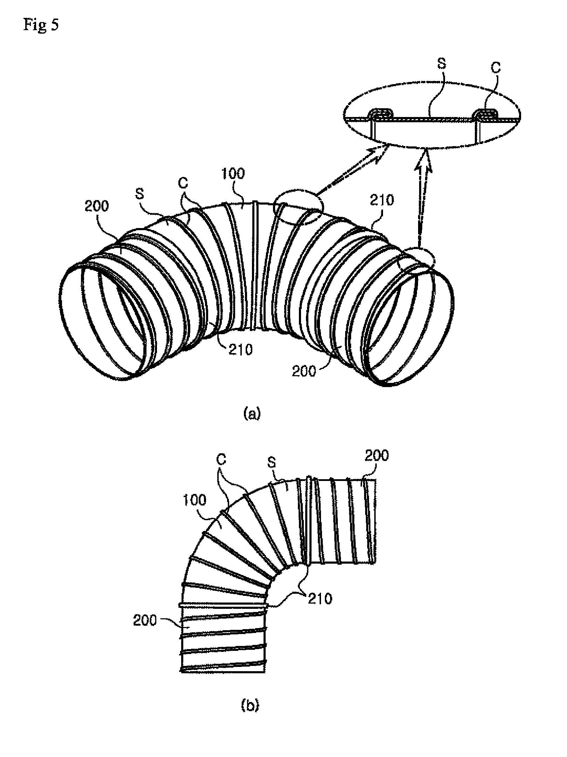

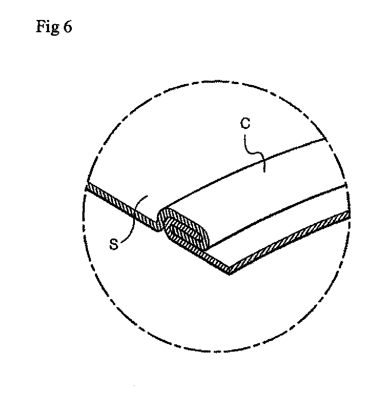

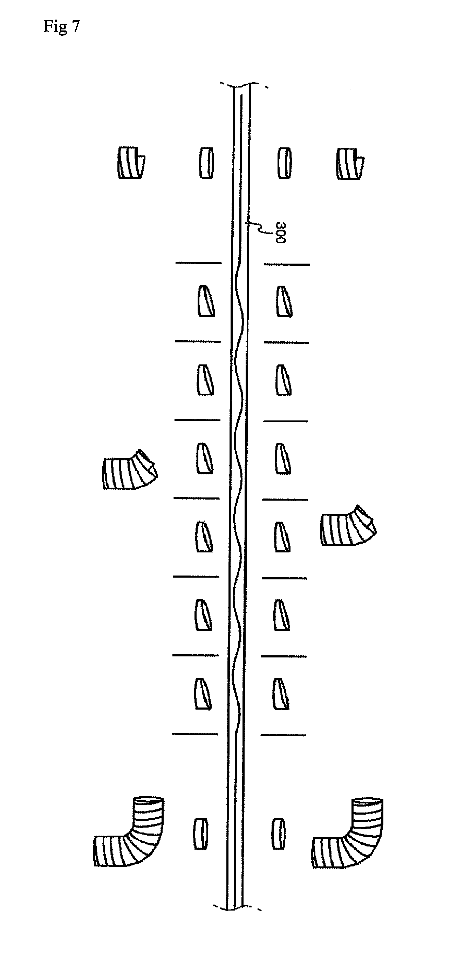

As shown in FIGS. 5 to 7, an integrated spiral duct in accordance with an exemplary embodiment of the present invention includes a curved duct 100, and straight connection ducts 200 formed at both ends of the curved duct 100. The curved duct 100 is integrally formed with the straight connection ducts 200 in spiral type without any joint. The duct is formed of a material having good formability and durability such as tinned iron, aluminum, and so on.

Here, when the spiral duct is uncoiled, it is a strip including both ends having a uniform width, and an intermediate part having one side with a periodical waveform and the other side of a flat shape.

At this time, side edges C of the respective sections S of the spiral are hooked to each other and then seamed.

Specifically, each section S of the spiral has an approximately Z-shaped cross-section, and flange parts of the section S constitute a coupling part of the seamed side edges C, thereby pressing the seamed side edges to securely couple the ducts through the seaming process. As a result, the duct in accordance with an exemplary embodiment of the present invention has no welding part.

Next, entirely reviewing the integrated spiral duct in accordance with an exemplary embodiment of the present invention, the seamed side edges of each section of the spiral have protrusion parts due to a connection part.

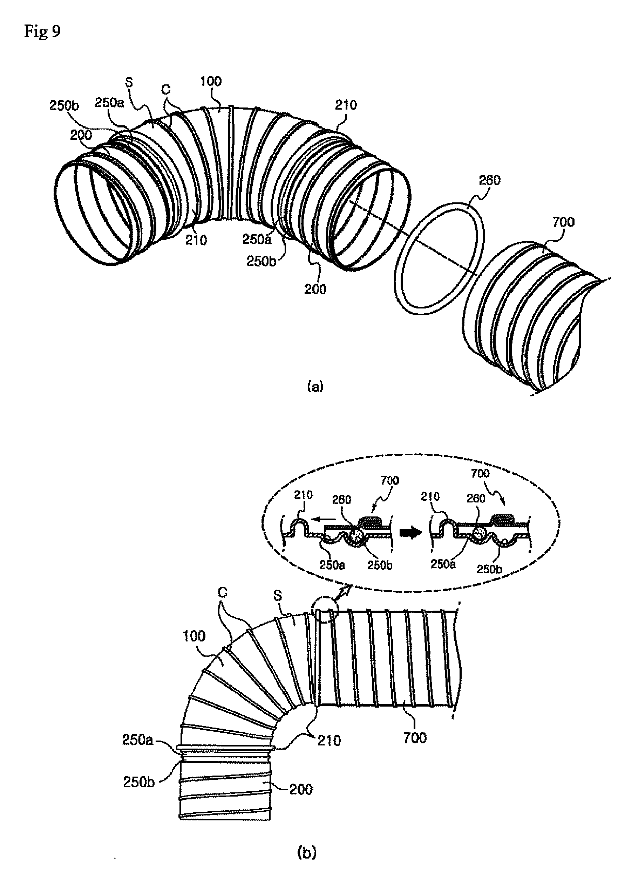

Meanwhile, as shown in FIG. 9, each of the both straight connection ducts 200 has a convex annular part 210 formed at a predetermined position to be connected to another duct. For this purpose, a long convex part should be formed at the strip constituting the straight connection duct 200, which has uniform width, in its longitudinal direction.

In addition, the straight connection duct 200 has dual concave annular parts 250a and 250b formed outside the convex annular part 210. The dual concave annular parts 250a and 250b have different depths, i.e., the outer concave annular part 250b has a depth larger than that of the inner concave annular part 250a.

When another straight duct 700 is coupled with the straight connection duct 200, a O-ring 260 can be installed between them. Thereby, when O-ring 260 formed of rubber is first inserted into the outer concave annular part 250b and the other straight duct 700 is inserted, the O-ring 260 is rotated to go over a partition wall between the inner and outer annular parts 250a and 250b to be closely fitted into the shallow concave annular part 250a.

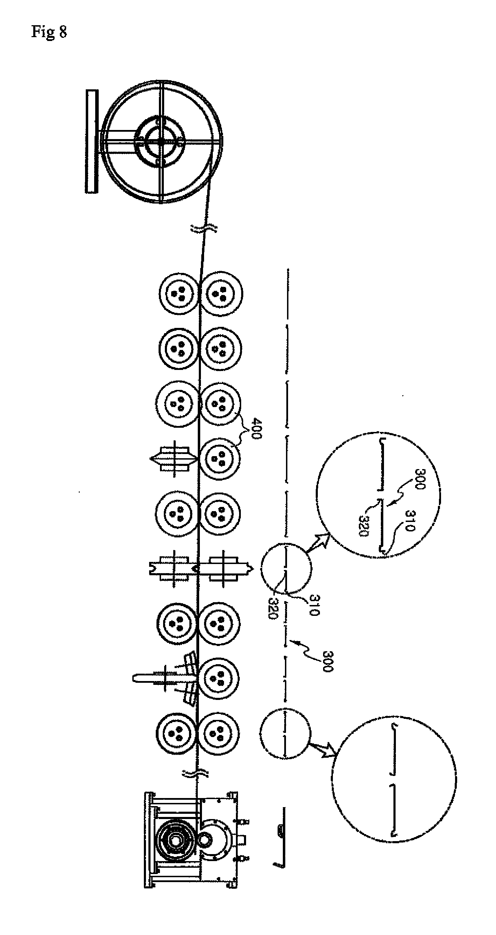

Hereinafter, a method of manufacturing a spiral duct will be described with reference to FIG. 8.

First, a long metal strip 300 having a uniform width is prepared.

Then, the metal strip passes through a stage in which a plurality of forming roll pairs 400 are installed

Both side edges of the metal strip are bent downward by the forming rolls 400 to form hooking grooves 310.

Next, a centerline of the width of the metal strip 300 is cut in its longitudinal direction by a cutting forming roll. In this case, a disposition angle of a cutter is continuously varied to alternately form a small width part and a large width part in intermediate part and to form a uniform width at both ends.

In addition, side surfaces of the respective metal strips separated from the cutting line of the width of the metal strip 300 are bent in a direction opposite to the hooking groove 310 to from hooks 320, thereby forming an approximately Z-shaped cross-section.

Eventually, when seen from a cross-sectional view of one of the two metal strips 300, each metal strip has the hooking groove 310 formed at one end surface thereof and positioned at a slightly lower level than the metal strip, and the hook 320 bent in a direction opposite to the hooking groove 310 to be combined to the hooking groove 310.

Next, the metal strip is wound and seamed using a seaming machine to complete a integrated duct.

As can be seen from the foregoing, since a metal strip is continuously wound to form a duct without any joint, it is possible to reduce the number of manufacturing processes to remarkably increase productivity and quality.

In addition, since a curved duct is integrally formed with straight connection ducts, it is possible to remove an intermediate joint and increase durability remarkably.

While this invention has been described with reference to exemplary embodiments thereof, it will be clear to those of ordinary skill in the art to which the invention pertains that various modifications may be made to the described embodiments without departing from the spirit and scope of the invention as defined in the appended claims and their equivalents.

## Claims

1. An integrated spiral duct comprising:
a curved duct; and
straight connection ducts formed at both ends of the curved duct,
wherein the curved duct is integrally formed with the straight connection ducts in spiral type without any joint.

2. The integrated spiral duct according to Claim 1, wherein the spiral duct is a strip including both ends having a uniform width, and an intermediate part having one side with a periodical waveform and the other side of a straight flat shape when the spiral duct is uncoiled.

3. The integrated spiral duct according to Claim 1, wherein each of the straight connection ducts has a convex annular part formed at a predetermined position to be connected to another duct.

4. The integrated spiral duct according to any one of Claims 1 to 3, wherein side edges of the respective sections of the spiral are hooked to each other and then seamed.

5. The integrated spiral duct according to Claim 4, wherein each section of the spiral has a Z-shaped cross-section, and flange parts of the section constitute a coupling part of the seamed side edges.

6. The integrated spiral duct according to Claim 3, wherein the straight connection duct has dual concave annular parts formed outside the convex annular part, and an O-ring is further installed to be inserted into the concave annular part.
